# EUROPÄISCHE PATENTSCHRIFT

(11) **EP 3 242 848 B1**
(45) Veröffentlichungstag und Bekanntmachung des Hinweises auf die Patenterteilung: **27.03.2019**
(21) Anmeldenummer: 16700016.5
(22) Anmeldetag: 05.01.2016
(51) Int. Cl.: B65H 54/58, B01D 63/02

(54) **VORRICHTUNG UND VERFAHREN ZUR WEITERVERARBEITUNG EINES AUFGEHASPELTEN FADENSTRANGS**
DEVICE AND METHOD FOR THE FURTHER PROCESSING OF A WOUND THREAD STRAND
DISPOSITIF ET PROCÉDÉ DE TRAITEMENT ULTÉRIEUR D'UN ÉCHEVEAU DE FILS DÉROULÉS

(30) Priorität: 07.01.2015 DE 102015000247
(43) Veröffentlichungstag der Anmeldung: 15.11.2017
(73) Patentinhaber: Filatech Filament Technology u. Spinnanlagen GmbH, 53424 Remagen (DE)
(72) Erfinder: REUSCHENBACH, Hermann, 80807 München (DE)
(74) Vertreter: Weickmann & Weickmann PartmbB
(86) Internationale Anmeldenummer: PCT/EP2016/050043
(87) Internationale Veröffentlichungsnummer: WO 2016/110474

(56) Entgegenhaltungen:
- EP-A1- 0 309 331
- EP-A2- 2 089 304
- DE-A1-102012 021 011
- JP-A- H08 299 763
- US-A- 4 253 289

## Beschreibung

Die vorliegende Erfindung betrifft eine Vorrichtung und ein Verfahren, um einen Fadenstrang, insbesondere aus Hohlfäden für Dialysatoren und ähnliche Filtereinrichtungen, der auf einer sogenannten 2-Punkt-Haspel aufgewickelt wurde, in einem vollautomatischen Ablauf für nachfolgende Arbeitsgänge bereitzustellen, z.B. um ihn mit Folie zu umhüllen und in einzelne Bündel aufzuteilen. Dazu muss der Strang insbesondere von der Haspel abgenommen und zu einer Weiterverarbeitungsstation transportiert werden.

An einer "2-Punkt-Haspel" (gelegentlich auch als "2-Zinken-Haspel" oder "two-point reel winding device" bezeichnet) sind nur zwei Tragarme zur Aufnahme des Wickelgutes angebracht, so dass die zugeführten Fäden zu einem linearen Strang aufgehaspelt werden. Diese Bauart ist u.a. in den Veröffentlichungen EP 0 309 331 B1, JP 00 2009 234 680 A, JP 00 2008 280111 A, JP 00 2003 300 672 A, US 4666543, JP 000H05161830 A und FR 00000 267 4231 A1 erwähnt, jedoch ist in keinem dieser Dokumente ein automatischer Ablauf beschrieben. Zwar ist in EP 0 309 331 B1 angedeutet, dass der Abstand der beiden Tragarme mittels einer teleskopartigen Vorrichtung verkürzt werden kann, wohl um das Bündel leichter von der Haspel abnehmen zu können, aber es ist nicht zu erkennen, wie dieser Vorgang selbsttätig ablaufen soll.

Dagegen ist in EP 2 089 304 B1 eine Lösung mit zwei Haspeln beschrieben, die eine vollautomatische Arbeitsweise ermöglicht. Während die erste Haspel rotiert und aus den zugeführten Fäden einen Strang bildet, steht die zweite Haspel in einer Weiterverarbeitungs-Position, wo der Strang, noch auf der Haspel aufgespannt, mit Folie umwickelt und in einzelne Bündel aufgeteilt wird. Beide Haspeln sind gemeinsam um eine horizontale Achse um 180° zu schwenken, so dass sie fortlaufend vom Aufhaspeln zur Bündelherstellung und wieder zurück wechseln können. Hier wird also der Strang mitsamt der Haspel zur Weiterverarbeitung transportiert und erst dort von der Haspel getrennt.

Nachteilig an dieser Anordnung ist der erhöhte Herstellungsaufwand, da alle Komponenten, wie z.B. Haspel-Balken, Lagerung, Antrieb, DrehzahlSteuerung, Haspelköpfe, Faden-Klemmung, Stauch- und Streck-Einrichtungen, Drehdurchführung der Energie- und Steuerleitungen usw. immer zweifach vorhanden sein müssen, mitsamt den zugehörigen Steuerungen. Zudem muss fürjede Stelle, an der aufgehaspelt wird, immer auch eine eigene Weiterverarbeitungsvorrichtung vorhanden sein, auch wenn deren Zykluszeit für zwei oder mehr Haspelvorgänge ausreichen würde. Wegen dieser starren Verknüpfung ist es nicht möglich, auf eine andere Vorrichtung auszuweichen, wenn mal eine Störung bei der Weiterverarbeitung auftritt.

Weiterhin nachteilig ist der Platzbedarf dieser Anordnung: Da Haspel- und Weiterverarbeitungsposition unmittelbar nebeneinander platziert sein müssen, ergibt sich - in Laufrichtung der Fäden gesehen - eine große Baubreite der Anlage; dies kann ungünstig sein, wenn die von einer Spinnanlage gelieferten Fäden auf drei oder vier Haspeleinrichtungen aufgeteilt werden sollen, was in der Praxis vielfach üblich ist.

Die vorliegende Erfindung will Lösungen anbieten, mit denen die oben erwähnten Nachteile bekannter Vorrichtungen und Verfahren vermieden werden.

Dies wird ermöglicht, indem der aufgehaspelte Fadenstrang direkt von der Haspel abgenommen und danach weitertransportiert wird, wobei die in den Ansprüchen genannten Merkmale und Verfahrensschritte benutzt werden.

Damit sind die folgenden Vorteile zu erzielen:
a) geringer Aufwand, da gegenüber EP 2 089 304 B1 nur die halbe Anzahl von Haspeln, nur eine Anfangsklemme (und keine Endklemme) sowie keine Drehdurchführungen für Signal- und Energieleitungen erforderlich sind;
b) flexible Raumaufteilung, da die Weiterverarbeitung in einer beliebigen Position seitlich oder hinter der Haspel vorgesehen werden kann;
c) mögliche Kosteneinsparung, da ggf. eine einzige Vorrichtung die Weiterverarbeitung von Fadensträngen aus mehreren Haspeln übernehmen kann;
d) Vermeidung von Ausfallzeiten bei Störungen, da vorübergehend auf eine andere Weiterverarbeitungsvorrichtung ausgewichen werden kann.

Ein Ausführungsbeispiel der Erfindung ist auf den folgenden Seiten beschrieben und in den Zeichnungen Fig. 1 bis Fig. 3 dargestellt.
Fig. 1 zeigt den Aufriss einer 2-Punkt-Haspel,
Fig. 2 die Draufsicht aus Richtung X und
Fig. 3 einen Schnitt entlang der Linie A-A.

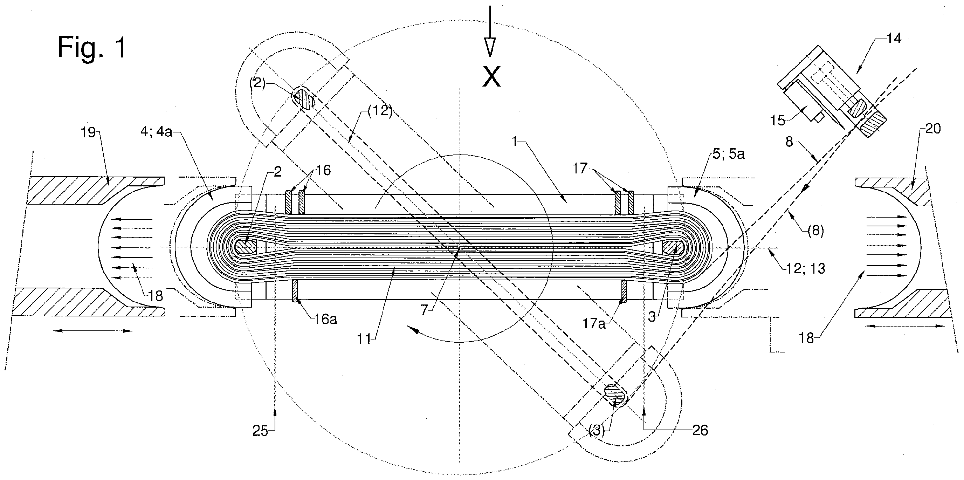

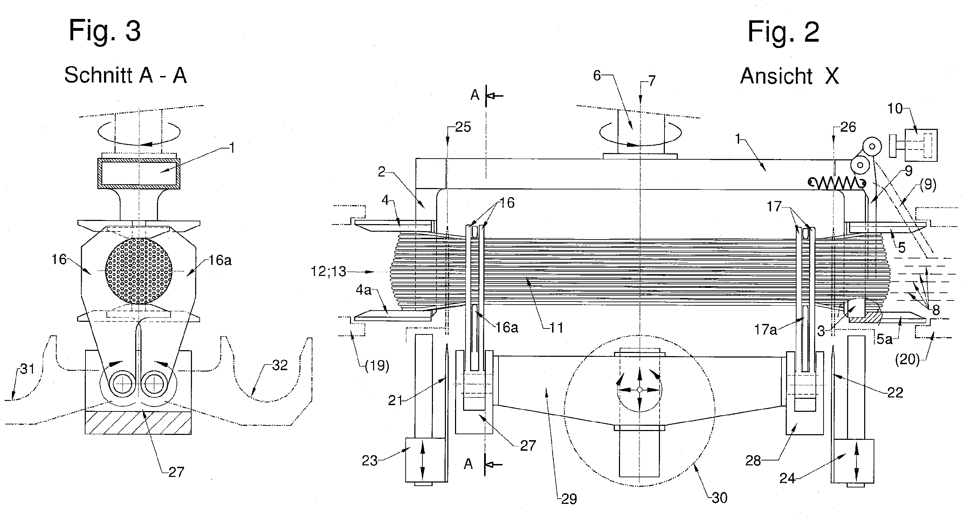

Die 2-Punkt-Haspel in Fig. 1 besteht im wesentlichen aus dem Haspelbalken 1, den beiden Tragarmen 2 und 3 mit den Begrenzungskörpern 4 und 4a bzw. 5 und 5a, sowie dem (in Fig. 2 gezeigten) Drehantrieb 6 mit der Drehachse 7. Der Anfang der zugeführten Hohlfäden 8 kann, wenn erforderlich, mit einer federbelasteten Anfangsklemme 9 fixiert werden (siehe Fig. 2), die ggf. von außen mittels einer Öffnungsvorrichtung 10 zu lösen ist. Durch Rotation der Haspel werden die zugeführten Hohlfäden 8 zu einem Fadenstrang 11 aufgewickelt, wobei sie auf den Tragarmen 2 und 3 aufliegen und dort jeweils um 180" umgelenkt werden. In der gezeichneten Stellung hat der Fadenstrang 11 die gewünschte Faden-Anzahl erreicht, und die Haspel wurde in einer Position gestoppt, bei der ihre Längsachse 12 mit der x-Achse 13 zusammenfällt. Ein Übergabegreifer 14, der aus der industriellen Praxis bei Haspelanlagen bekannt ist, kann nun die zugeführten Fäden 8 festklemmen. Gleichzeitig umschließen die halbkreisförmigen Greiferbacken 16 und 16a sowie 17 und 17a den Fadenstrang 11 in der Nähe der Tragarme 2 und 3. Das Schneidmesser 15 kann die zugeführten Fäden am Übergabegreifer abtrennen. Beidseitig der Haspel sind Absaugvorrichtungen vorgesehen, die mit Hilfe von Vakuumpumpen oder Ejektoren eine starke Luftströmung 18 erzeugen, und deren Trichter 19 und 20 bei Stillstand der Haspel aus beiden Richtungen bis an die Konturen der Begrenzungsflächen 4, 4a, 5 und 5a heranzufahren sind.

In der Draufsicht von Fig. 2 ist die Anfangsklemme 9 gezeigt, die mit einer pneumatisch oder elektromotorisch angetriebenen Öffnungsvorrichtung 10 zu lösen ist, vorzugsweise von außerhalb der Haspel. Mit Hilfe von zwei Trennvorrichtungen, bestehend aus den Schneidwerkzeugen 21 u. 22 (rotierende Kreismesser oder starre Klingen mit ziehendem Schnitt) und den Vorschubeinrichtungen 23 und 24, lässt sich der von den Greiferbacken 16...17a umschlossene Fadenstrang 11 entlang den Linien 25 und 26 durchschneiden, so dass der lineare Bereich des Fadenstrangs zwischen den Linien 25 und 26 für die Weiterverarbeitung zur Verfügung steht, während die um 180" gebogenen Fadenstücke im Bereich der Tragarme 2 und 3 mit Hilfe der Luftströmung 18 abgesaugt werden können. Die Trennvorrichtungen sind vorzugsweise ortsfest am Maschinengestell der Haspelanlage montiert, können jedoch auch mit den unten beschriebenen Greifern 27 und 28 bzw. der Traverse 29 verbunden sein. Der nutzbare lineare Bereich des Fadenstrangs 11 wird weiterhin an den Enden von den Greiferbacken 16 und 16a sowie 17 und 17a festgehalten. Die Greiferbacken werden betätigt von pneumatisch oder elektromotorisch angetriebenen Greifern 27 und 28, die als Parallel- oder Winkelgreifer ausgebildet sein können und über eine Traverse 29 miteinander verbunden sind. Die Traverse 29 mitsamt den beiden Greifern lässt sich mit Hilfe einer ein- oder mehrachsigen Handhabungsvorrichtung 30 schwenken und/oder linear verfahren, um den abgetrennten Fadenstrang zu einer der vorhandenen Weiterverarbeitungsstationen zu transportieren.

Im Schnittbild Fig.3 ist der Greifer 27 - hier beispielhaft als Winkelgreifer dargestellt - mit den zugehörigen Greiferbacken 16 und 16a angedeutet. Die den Fäden zugewandten Konturen 31 und 32 der Greiferbacken sind so geformt, dass sie sich in der geschlossenen Stellung überschneiden und auch kleinere oder größere Strang-Durchmesser - je nach Drehwinkel - ringsum erfassen können. Wenn der Öffnungswinkel zwischen den Greiferbacken, wie hier im Beispiel gezeigt, etwa 180" beträgt, kann ggf. eine Zustell-Bewegung, z.B. der Traverse zum Fadenstrang hin, eingespart werden.

Die zeitliche Reihenfolge des Bewegungsablaufs ergibt sich aus der Funktion der einzelnen Komponenten und ist in den Patentansprüchen durch die einzelnen Verfahrensschritte dargestellt. Verschiedene Schritte können auch parallel ablaufen.

Die Erfindung betrifft eine Vorrichtung und ein Verfahren zur Weiterverarbeitung eines aufgehaspelten Fadenstrangs.

Bei einer vollautomatischen Produktion von Hohlfaden-Bündeln muss der auf einer 2-Punkt-Haspel aufgewickelte Fadenstrang zu einer Weiterverarbeitungsstation transportiert werden, z.B. zum Umwickeln und Fixieren der Fäden mit Folie. Dazu werden kostengünstige Lösungen gesucht, die eine flexible Zuordnung zwischen Haspeln und Weiterverarbeiten ermöglichen.

Bei der vorgeschlagenen Lösung wird nicht die ganze Haspel zur Weiterverarbeitung geschwenkt, sondern der Fadenstrang (11) wird von der Haspel abgenommen, indem er von zwei Greifern (27; 28) erfasst, in der Nähe der beiden Tragarme (2; 3) durchtrennt und mit Hilfe einer Handhabungsvorrichtung (30) zu einer - ggf. frei wählbaren - Weiterverarbeitungsstation transportiert wird. Die abgetrennten Fadenstücke aus dem Bereich der 180 °-Umlenkung werden abgesaugt. Weiterverarbeitungsanlagen mit kurzen Zykluszeiten im Vergleich zum Haspelvorgang können dabei zwei oder mehr Haspelstationen bedienen.

Das Verfahren ist geeignet für die Verarbeitung von empfindlichem Wickelgut, z.B. Hohlfäden für Dialysefilter, das auf einer 2-Punkt-Haspel aufgewickelt wird und bei dem der Fadenstrang durchtrennt werden darf.

### Liste der Bezugszeichen:

- 1: Haspelbalken
- 2; 3: Tragarme (der Haspel)
- 4; 4a; 5; 5a: Begrenzungsflächen (der Tragarme)
- 6: Drehantrieb (der Haspel)
- 7: Drehachse des Haspel-Balkens
- 8: (zugeführte) Hohlfäden
- 9: Anfangsklemme (für zugeführte Fäden)
- 10: Öffnungsvorrichtung (für die Anfangsklemme)
- 11: Fadenstrang
- 12: Haspel-Längsachse
- 13: x-Achse
- 14: Übergabegreifer (für zugeführte Fäden)
- 15: Schneidmesser (für zugeführte Fäden)
- 16;16a;17;17a: Greiferbacken (für Strang)
- 18: Luftströmung (der Absaugvorrichtung)
- 19; 20: Trichter (der Absaugeinrichtung)
- 21; 22: Schneidwerkzeuge (für Strang)
- 23; 24: Vorschubeinrichtung (für Schneidwerkzeuge)
- 25; 26: (Trenn-)Linien
- 27; 28: Greifer
- 29: Traverse
- 30: Handhabungseinrichtung
- 31; 32: Konturen der Greiferbacken

## Patentansprüche

1. Vorrichtung zur Weiterverarbeitung eines aufgehaspelten Fadenstrangs, insbesondere zum Abnehmen des Fadenstrangs von der Haspel und zum Transportieren zu einer Weiterverarbeitungsstation, insbesondere für einen Strang aus Hohlfäden für Filtereinrichtungen, wobei
- an der Haspel zwei Tragarme (2; 3) für die Aufnahme der Fäden vorhanden sind,
- die Haspel nach Erreichen einer vorgegebenen Fadenzahl in einer definierten Stellung stoppt,
- ein Übergabegreifer (14) vorgesehen ist, der die zugeführten Fäden (8) festklemmen, abtrennen und an eine leere Haspel übergeben kann,
- und wobei die Haspel ggf. eine Anfangsklemme (9) aufweist, um den Anfang der zugeführten Fäden (8) zu fixieren,
**dadurch gekennzeichnet, dass** folgende Einrichtungen vorhanden sind:
1.1 mindestens zwei Greifer (27; 28) mit Greiferbacken (16; 16a; 17; 17a), die den Fadenstrang (11) allseitig umschließen können,
1.2 Schneidwerkzeuge (21; 22) mit Vorschubeinrichtungen (23; 24), die den Fadenstrang (11) rechtwinklig durchtrennen können,
1.3 Absaugeinrichtungen, deren Trichter (19; 20) bis an die Begrenzungsflächen (4; 4a; 5, 5a) der Tragarme (2; 3) heranfahren und abgetrennte Fadenstücke mit Hilfe eines Luftstroms (18) absaugen können, und
1.4 eine Handhabungseinrichtung (30), die mindestens eine Rotations- oder Linearachse umfasst und die Greifer (27; 28) mitsamt des abgetrennten Fadenstrangs (11) zu einer Weiterverarbeitungsstation transportieren kann.

2. Verfahren zur Weiterverarbeitung eines aufgehaspelten Fadenstrangs (11) mit einer Vorrichtung nach Anspruch 1, das folgende Schritte umfasst:
2.1 die Haspel stoppt in der vorgegebenen Stellung,
2.2 der Übergabegreifer (14) klemmt die zugeführten Fäden (8),
2.3 die Greiferbacken (16; 16a; 17; 17a) umschließen den Fadenstrang (11),
2.4 das Schneidmesser (15) trennt die zugeführten Fäden (8) zwischen Übergabegreifer (14) und Fadenstrang (11) durch,
2.5 die Absaugung wird eingeschaltet und die Trichter (19; 20) an die Trennflächen (4; 4a; 5; 5a) herangefahren,
2.6 die Vorschubeinrichtungen (23; 24) verfahren die Schneidwerkzeuge (21 ; 22) und durchtrennen den Fadenstrang (11) entlang den Linien (25; 26),
2.7 die Öffnungsvorrichtung (10) fährt vor und löst die Anfangsklemme (9),
2.8 die abgetrennten Fäden aus dem Bereich der Tragarme (2; 3) werden angesaugt und durch die Luftströmung (18) zu einem Auffangbehälter transportiert,
2.9 die Handhabungsvorrichtung (30) verfährt die Greifer (27; 28) mitsamt dem Fadenstrang (11) zu einer Weiterverarbeitungsstation,
2.10 die Trichter (19; 20) fahren wieder zurück, und die Absaugeinrichtung schaltet ab,
2.11 der nächste Haspelvorgang wird eingeleitet, indem die folgenden bereits bekannten Schritte ausgeführt werden:
2.11.1 der Übergabegreifer (14) übergibt den Anfang der zugeführten Fäden (8) an die Anfangsklemme (9) der leeren Haspel,
2.11.2 die Öffnungsvorrichtung (10) fährt zurück und schließt dadurch die Anfangsklemme (9),
2.11.3 der Übergabegreifer (14) löst die Fadenklemmung und fährt zurück,
2.11.4 die Haspel beginnt zu drehen zu einem neuen Haspel-Zyklus.

## Claims

1. Device for further processing a wound thread hank, in particular for removing the thread hank from the reel and transporting to a further processing station, in particular for a hank of hollow threads for filter devices, wherein
- two support arms (2; 3) for receiving the threads are present on the reel,
- the reel stops in a defined position after reaching the specified number of threads,
- a transfer gripper (14) is provided which can clamp, cut and transfer the supplied threads (8) to an empty reel,
- and wherein the reel, if appropriate, has a starting clamp (9) to fix the beginning of the supplied threads (8) in place,
**characterised in that** the following devices are present:
1.1 at least two grippers (27; 28) with gripper jaws (16; 16a; 17; 17a) which can enclose the thread hank (11) on all sides,
1.2 cutting tools (21; 22) with feed devices (23; 24) which can cut through the thread hank (11) at right angles,
1.3 suction devices whose funnels (19; 20) can approach the separating surfaces (4; 4a; 5, 5a) of the support arms (2; 3) and suck in cut pieces of thread with the help of an air flow (18), and
1.4 a handling device (30), which has at least one rotational or linear axis, and which can transport the grippers (27; 28) together with the severed thread hank (11) to a further processing station.

2. Method for further processing a wound thread hank (11) with a device according to claim 1, comprising the following steps:
2.1 the reel stops in the specified position,
2.2 the transfer gripper (14) clamps the supplied threads (8),
2.3 the gripper jaws (16; 16a; 17; 17a) enclose the thread hank (11),
2.4 the cutter (15) cuts through the supplied threads (8) between transfer gripper (14) and thread hank (11),
2.5 the suction is switched on and the funnels (19; 20) approach the separating surfaces (4; 4a; 5; 5a),
2.6 the feed devices (23; 24) move the cutting tools (21; 22) and cut through the thread hank (11) along the lines (25; 26),
2.7 the opening device (10) moves forward and releases the starting clamp (9),
2.8 the cut threads from the region of the support arms (2; 3) are sucked in and transported by the air flow (18) to a collecting container,
2.9 the handling device (30) moves the grippers (27; 28) together with the thread hank (11) to a further processing station,
2.10 the funnels (19; 20) move back again, and the suction device switches off,
2.11 the next winding process is initiated by carrying out the following steps which are already known:
2.11.1 the transfer gripper (14) transfers the beginning of the supplied threads (8) to the starting clamp (9) of the empty reel,
2.11.2 the opening device (10) moves back and thus closes the starting clamp (9),
2.11.3 the transfer gripper (14) releases the thread clamp and moves back,
2.11.4 the reel starts to turn for a new winding cycle.

## Revendications

1. Dispositif servant au traitement ultérieur d'un écheveau de fil enroulé, en particulier servant à retirer l'écheveau de fil de la bobine et servant au transport vers un poste de traitement ultérieur, en particulier pour un écheveau composé de fils creux pour des systèmes de filtration, dans lequel
- deux bras porteurs (2 ; 3) pour le logement des fils sont présents au niveau de la bobine,
- la bobine s'arrête dans une position définie après avoir atteint un nombre de fils prédéfini,
- un grappin de transfert (14) est prévu, qui peut coincer, séparer les fils (8) amenés et les transférer à une bobine vide,
- et dans lequel la bobine présente éventuellement une attache de début (9) pour bloquer le début des fils (8) amenés,
**caractérisé en ce que** sont prévus les systèmes suivants :
1.1 au moins deux grappins (27 ; 28) avec des mâchoires de grappin (16 ; 16a ; 17 ; 17a), qui peuvent entourer de toutes parts l'écheveau de fil (11),
1.2 des outils de découpage (21 ; 22) avec des systèmes d'avancée (23 ; 24), qui peuvent sectionner à angle droit l'écheveau de fil (11),
1.3 des systèmes d'évacuation par aspiration, dont les trémies (19 ; 20) peuvent s'approcher jusqu'aux faces de délimitation (4 ; 4a ; 5, 5a) des bras porteurs (2 ; 3) et évacuer par aspiration des morceaux de fil séparés à l'aide d'un flux d'air (18), et
1.4 un système de manipulation (30), qui comprend au moins un axe de rotation ou linéaire et peut transporter les grappins (27 ; 28) y compris l'écheveau de fil (11) séparé vers un poste de traitement ultérieur.

2. Procédé servant au traitement ultérieur d'un écheveau de fil (11) enroulé avec un dispositif selon la revendication 1, qui comprend les étapes suivantes :
2.1 la bobine s'arrête dans la position prédéfinie,
2.2 le grappin de transfert (14) serre les fils (8) amenés,
2.3 les mâchoires de grappin (16 ; 16 ; 17 ; 17a) entourent l'écheveau de fil (11),
2.4 la lame de découpage (15) sectionne les fils (8) amenés entre le grappin de transfert (14) et l'écheveau de fil (11),
2.5 l'évacuation par aspiration est activée et les trémies (19 ; 20) sont rapprochées des surfaces de séparation (4 ; 4a ; 5 ; 5a),
2.6 les systèmes d'avancement (23 ; 24) déplacent les outils de découpage (21 ; 22) et sectionnent l'écheveau de fil (11) le long des lignes (25 ; 26),
2.7 le dispositif d'ouverture (10) avance et desserre l'attache de début (9),
2.8 les fils séparés provenant de la zone des bras porteurs (2 ; 3) sont aspirés et transportés par le flux d'air (18) vers un contenant de collecte,
2.9 le dispositif de manipulation (30) déplace les grappins (27 ; 28) y compris l'écheveau de fil (11) vers un poste de traitement ultérieur,
2.10 les trémies (19 ; 20) retournent à leur position initiale et le système d'évacuation par aspiration est désactivé,
2.11 la prochaine opération de bobinage est lancée par l'exécution des étapes suivantes déjà connues :
2.11.1 le grappin de transfert (14) transfère le début des fils (8) amenés à l'attache de début (9) de la bobine vide,
2.11.2 le dispositif d'ouverture (10) retourne à sa position initiale et ferme ce faisant l'attache de début (9),
2.11.3 le grappin de transfert (14) desserre le serrage de fil et retourne à sa position initiale,
2.11.4 la bobine commence à tourner pour un nouveau cycle de bobinage.
